(19) **Europäisches Patentamt**
**European Patent Office**
**Office européen des brevets**

(11) **EP 3 991 877 A1**

(12) **EUROPEAN PATENT APPLICATION**
published in accordance with Art. 153(4) EPC

(43) Date of publication:
**04.05.2022 Bulletin 2022/18**

(21) Application number: **20856318.9**

(22) Date of filing: **11.08.2020**

(51) International Patent Classification (IPC):
**B22F 3/105** (2006.01)     **B22F 3/16** (2006.01)
**B22F 9/08** (2006.01)     **B33Y 10/00** (2015.01)
**B33Y 30/00** (2015.01)     **B29C 64/153** (2017.01)
**B29C 64/205** (2017.01)

(52) Cooperative Patent Classification (CPC):
**B22F 3/105; B22F 3/16; B22F 9/08; B29C 64/153;**
**B29C 64/205; B33Y 10/00; B33Y 30/00;**
**Y02P 10/25**

(86) International application number:
**PCT/JP2020/030636**

(87) International publication number:
**WO 2021/039384 (04.03.2021 Gazette 2021/09)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **23.08.2019 JP 2019152745**

(71) Applicant: **KABUSHIKI KAISHA KOBE SEIKO SHO**
**(KOBE STEEL, LTD.)**
**Hyogo 651-8585 (JP)**

(72) Inventors:
• **HATSUDA Akimine**
**Hyogo 651-2271 (JP)**
• **YAMADA Takeshi**
**Hyogo 651-2271 (JP)**
• **KUROSAWA Eisuke**
**Hyogo 651-2271 (JP)**

(74) Representative: **Müller-Boré & Partner**
**Patentanwälte PartG mbB**
**Friedenheimer Brücke 21**
**80639 München (DE)**

(54) **RECOATER AND ADDITIVE MANUFACTURING DEVICE COMPRISING THE SAME, AND ADDITIVE MANUFACTURING METHOD**

(57)    For a slit outlet width d and a slit inclination angle $\theta$, the following relations (1) and (2) are satisfied: $d \geq 0.0024 \times (\theta - 75°)^2 + 4.5$, and $d \leq Lc - 2h/\tan\theta$, wherein $\theta$ [°] is a slit inclination angle being an acute angle formed by at least one of slit inner wall surfaces and a slit outlet surface of a slit part, d [mm] is a slit outlet width being a width of a slit outlet formed by the pair of slit inner wall surfaces in a moving direction, h [mm] is a slit height being a shortest distance between the slit outlet and a slit inlet, and Lc [mm] is a retention section width being a width of a powder retention section in the moving direction at a position where the powder retention section is connected to the slit part.

FIG. 2

**Description**

TECHNICAL FIELD

The present invention relates to a recoater, additive manufacturing apparatus including the same, and additive manufacturing method.

BACKGROUND ART

A method of dividing 3D CAD (Computer Aided Design) data into layers, and stacking layers along the divided layers to produce a 3D object is common as "Additive Manufacturing" technique. With this technique, complex shapes can be easily manufactured without using molds as long as 3D CAD data is available.

Examples of such additive manufacturing methods include a powder bed fusion (PBF) method in which spread powders of metal materials are selectively heated to fuse and solidify the powders or sinter the powders to form an additively manufactured object. In the power bed fusion method, a selective laser melting (SLM) method using laser beam as a heat source is widely used.

An additive manufacturing apparatus based on the powder bed fusion method typically includes a storage section that stors powder materials, an additive manufacturing section where the powder materials are supplied and additive manufacturing is performed, and a recoater that transports and levels the powder materials. In the additive manufacturing section, the storage section that stores the powder materials is arranged adjacent to the side of a table having a bottom part that is elevated or lowered. The recoater is arranged such that the recoater can reciprocate between a space below the storage section and the table, and retains the powder material supplied from the storage section, and forms a layer of the powder material on or above the table in the additive manufacturing section.

The recoater retains the powder material in the powder retention section, and supplies the powder material to the additive manufacturing section by discharging the powder material downward through the slit part in the powder retention section.

By the way, the powder material supplied to such a recoater is needed to have good flowability so that clogging at the slit part does not occur. A technique of improving the flowability of such a powder material is disclosed, for example, in PLT 1.

PLT 1 describes that high flowability can be ensured by controlling the powder material used such that the number of grains with a diameter of 20 [μm] or less based on electron microscope observation is equal to or less than 15 number% of the total number of grains.

However, even for the powder material that meet the above requirements, the surface shape of individual powders varies between nearly spherical shape and an irregular shape with unevenness, depending on the manufacturing method of the powder material. In particular, in a case where the powder has an irregular grain shape, clogging at the slit part of the recoater may occur by the unevenness of the surface of the powder being intertwined with each other, or reduction in flowability of the powder material due to static electricity between the powders. For example, powders manufactured by a water atomization method tend to have a more irregular grain shape than powders manufactured by a gas atomization method, and clogging at the slit part is more likely to occur.

Table 1 shows an example of test results of flowability. According to this table, even if the powder material is made of the same stainless steel (SUS 316L), in the case of the powder material manufactured by the gas atomization method, a FR value (time (seconds) required for 50g of the powder material to flow down in the measurement method in accordance with JIS 2504) was 18.93 seconds, but in the case of the powder material manufactured by the water atomization method, clogging occurred. The angle of repose of the powder material manufactured by the water atomization method is larger than that of the powder material manufactured by the gas atomization method, and the powder manufactured by the water atomization method has lower flowability than the powder manufactured by the gas atomization method.

Table 1

| Evaluation of flowability of powders | | | |
|---|---|---|---|
| Manufacturing method of powder | Powder material | FR [sec/50g] | Angle of repose [°] |
| Water atomization method | SUS 316L | Clogging occurred | 39 |
| Gas atomization method | SUS 316L | 18.98 | 34 |

CITATION LIST

PATENT LITERATURE

PLT 1: JP 2018-172739 A

SUMMARY OF INVENTION

TECHNICAL PROBLEM

Therefore, an object of the present invention is to provide a recoater having a slit part that can always provide good flowability regardless of the manufacturing method of a powder material to be supplied, an additive manufacturing apparatus including the recoater, and an additive manufacturing method.

SOLUTION TO PROBLEM

The present invention includes the following configurations.

[1] A recoater that is to be used in an additive manufacturing apparatus based on a powder bed fusion method in which a powder material laid on or above an additive manufacturing section is selectively fused to form a fused body and the fused body is sequentially stacked, and moves over the additive manufacturing section to form a layer of the powder material on or above the additive manufacturing section,
the recoater comprising:

a powder retention section that retains the powder material; and
a slit part that is provided on the powder retention section, is a member extending in a direction that intersects with a moving direction of the recoater over the additive manufacturing section, and has a slit inlet that receives the powder material from the powder retention section and a slit outlet through which the powder material is discharged,
wherein a pair of slit inner wall surfaces facing each other across a gap in the moving direction is formed to be mutually inclined in the slit part such that the gap becomes narrower toward the slit outlet, and
the following relations (1) and (2) are satisfied:

$$d \geq 0.0024 \times (\theta - 75°)^2 + 4.5 \qquad (1)$$

$$d \leq Lc - 2h/\tan\theta \qquad (2)$$

wherein $\theta$ [°] is a slit inclination angle being an acute angle formed by at least one of the slit inner wall surfaces and a slit outlet surface of the slit part, d [mm] is a slit outlet width being a width of the slit outlet formed by the pair of slit inner wall surfaces in the moving direction, h [mm] is a slit height being a shortest distance between the slit outlet and the slit inlet, and Lc [mm] is a retention section width being a width of the powder retention section in the moving direction at a position where the powder retention section is connected to the slit part.

[2] An additive manufacturing apparatus comprising the recoater according to [1].
[3] An additive manufacturing method based on a powder bed fusion method, comprising selectively fusing a powder material laid on or above an additive manufacturing section to form a fused body, and sequentially stacking the fused body,

the additive manufacturing method comprising moving a recoater over the additive manufacturing section to form a layer of the powder material on or above the additive manufacturing section,
the recoater comprising:

a powder retention section that retains the powder material; and
a slit part that is provided on the powder retention section, is a member extending in a direction that intersects with a moving direction of the recoater over the additive manufacturing section, and has a slit inlet that receives the powder material from the powder retention section and a slit outlet through which the powder material is discharged,
wherein a pair of slit inner wall surfaces facing each other across a gap is formed to be mutually inclined in the slit part such that the gap in the moving direction becomes narrower toward the slit outlet, and

the following relations (1) and (2) are satisfied:

$$d \geq 0.0024 \times (\theta - 75°)^2 + 4.5 \qquad (1)$$

$$d \leq Lc - 2h/\tan\theta \qquad (2)$$

wherein $\theta$ [°] is a slit inclination angle being an acute angle formed by at least one of the slit inner wall surfaces and a slit outlet surface of the slit part, d [mm] is a slit outlet width being a width of the slit outlet formed by the pair of slit inner wall surfaces in the moving direction, h [mm] is a slit height being a shortest distance between the slit outlet and the slit inlet, and Lc [mm] is a retention section width being a width of the powder retention section in the moving direction at a position where the powder retention section is connected to the slit part.

ADVANTAGEOUS EFFECTS OF INVENTION

In the present invention, a recoater that has a slit part and can always provide good flowability regardless of a manufacturing method of a powder material to be supplied can be obtained. Therefore, additive manufacturing can be stably performed at a low cost.

BRIEF DESCRIPTION OF DRAWINGS

FIG. 1 shows a schematic configuration view of a powder additive manufacturing apparatus.
FIG. 2 shows a cross-sectional view of a main part of a recoater.
(A) to (D) of FIG. 3 show process diagrams of each additive manufacturing process in order.
(A) to (C) of FIG. 4 show process diagrams of each additive manufacturing process in order.
FIG. 5 shows a single logarithmic graph of cumulative frequency distribution of grain size of powder materials used, where the grain size is put on the logarithmic axis.
FIG. 6 shows a graph showing results of checking the flowability of the powder material by varying the slit inclination angle of the jig and the slit outlet width.
FIG. 7 is a graph showing extended data of FIG. 6 with the extended horizontal and vertical axes.
FIG. 8 shows a graph showing test results of checking the supply of the powder material by varying the slit outlet width and the slit inclination angle.
FIG. 9 shows a graph showing limit curves for different dimensions of the recoater.

DESCRIPTION OF EMBODIMENTS

Hereinbelow, embodiments of the present invention are described in detail with reference to the drawings.

<Configuration of powder additive manufacturing apparatus>

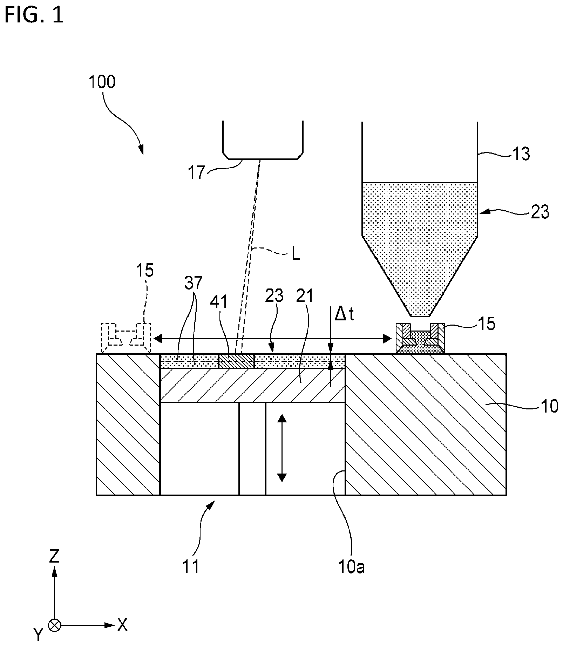

FIG. 1 shows a schematic configuration view of a powder additive manufacturing apparatus.
A powder additive manufacturing apparatus 100 includes an additive manufacturing section 11 provided in a housing 10, a powder pod 13, a recoater 155, and an optical scanning section 17.
The additive manufacturing section 11 includes a base plate 21 that is freely elevated and lowered in a slide hole 10a formed in the housing 10. The base plate 21 is elevated and lowered in the slide hole 10a by a vertical drive mechanism (not shown). The base plate 21 is rectangular in plan view from above the housing 10, and its top surface is flat.
The powder pod 13 is located above the housing 10 and stores a powder material 23. The powder pod 13 has a nozzle (not shown) that discharges the powder material 23 downward.
The recoater 15 is placed on the housing 10 and can be moved horizontally in the region including the area between the space below the powder pod 13 and the additive manufacturing section 11 by the horizontal drive mechanism (not shown). The recoater 15 is an elongated shape that extends in a direction intersecting with the horizontal movement direction (depth direction in FIG. 1), and is formed with a depth length such that an entire surface of the base plate 21 can be scanned by horizontal movement.

In this description, the vertical direction shown in FIG. 1 is defined as Z direction, the movement direction of the recoater 15 is defined as X direction, and the depth direction perpendicular to the X direction and Z direction is defined as Y direction. The movement direction of the recoater 15 is not necessarily limited to the horizontal direction, and can be set appropriately depending on the structure or the like of the powder additive manufacturing apparatus 100.

The optical scanning section 17 emits laser beam L toward the additive manufacturing section 11 based on the input 3D profile data. The laser beam L is a heat source for fusion of the powder material 23, and the powder material 23 within a region irradiated with the laser beam L is selectively fused to form a fused body 41. By sequentially staking the fused bodies 41, an additively manufactured object is obtained.

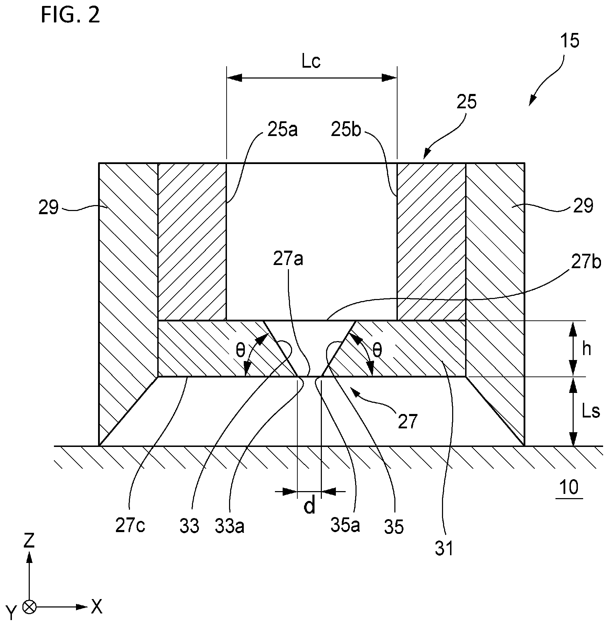

FIG. 2 shows a cross-sectional view of a main part of the recoater 15.

The recoater 15 includes a powder retention section 25 that defines a retention space in which the powder material 23 is retained, a slit part 27 provided on the lower side of the powder retention section 25 (i.e. at the bottom of the retention space), and a blade 29. The slit part 27 is a member extending in the direction (Y direction) that intersects with the movement direction (X direction) of the recoater 15, and a slit outlet 27a is formed therein for discharging the powder material 23 downward (Z direction). In this slit part 27, an opening that is provided at a position that faces the slit outlet 27a in the Z direction, and receives the powder material 23 from the powder retention section 25 is defined as a slit inlet 27b. The blade 29 is mounted on both ends of the powder retention section 25 and the slit part 27 in the X direction, and the powder material 23 on or above the additive manufacturing section 11 is smoothened by moving the recoater 15. The shape of the blade 29 is in any shape, and it may be configured such that the blade 29 is provided on only one side of the recoater 15 in the X direction.

The powder retention section 25 is formed along the Y direction of the recoater 15, and the powder retention space is defined on the inner side of a pair of the inner wall surfaces 25a facing each other. The powder retention section 25 may be a single structure in which the inner wall surface 25a is formed continuously from one end to the other end of the recoater 15 in the Y direction, or may be a structure in which the inner wall surface 25a is divided every predetermined length to define a plurality of retention spaces, and the plurality of retention spaces are arranged in a row.

The slit part 27 is formed in the bottom plate 31 that blocks the lower side of the powder retention section 25. On the lower side of the bottom plate 31, the above-described slit outlet 27a that penetrates in the thickness direction and is formed continuously along the Y direction opens. A pair of slit inner wall surfaces 33 and 35 facing each other are connected to the slit outlet 27a in the thickness direction. At least one of the pair of slit inner wall surfaces 33 and 35 is an inclined surface inclined from the thickness direction (Z direction) of the bottom plate 31, and the gap between the facing surfaces 33 and 35 of the slit part 27 in the X direction becomes narrower toward the slit outlet 27a. In other words, the inner wall surfaces 33 and 35 are arranged across a gap that tapers downward. The bottom plate 31 may be made of a single plate member with a slit part 27 formed therein, or may be made of a plurality of plate members combined to form a slit part 27.

Here, the width between the inner wall surfaces 25a and 25b in the X direction at the position where the powder retention section 25 is connected to the slit part 27 is defined as retention section width Lc [mm], the shortest distance between the slit outlet 27a and the slit inlet 27b which are formed by the pair of the slit inner wall surfaces 33 and 35 (in FIG. 2, the height of the slit inner wall surfaces 33 and 35 in the vertical direction) is defined as slit height h, the width of the slit outlet 27a in the X direction is defined as slit outlet width d [mm], an acute angle formed by at least one of the slit inner wall surfaces 35 and the slit outlet surface 27c where the slit outlet 27a is formed is defined as slit inclination angle θ [°]. The slit outlet surface 27c is a surface formed by virtually extending the slit outlet 27a formed on the bottom surface of the powder retention section 25. In FIG. 2, the slit outlet surface 27c is superimposed on the plane where the slit outlet 27a is formed in the bottom plate 31, and since this plane is also aligned with the horizontal direction, this plane is also called the horizontal plane. In this configuration, the slit inner wall surface 33 also has the same slit inclination angle θ. The slit outlet width d and the slit inclination angle θ are constant along the Y direction of the recoater 15.

In the recoater having this configuration, as described in detail below, the slit outlet width d and slit inclination angle θ satisfy the following relations (1) and (2).

$$d \geq 0.0024 \times (\theta - 75°)^2 + 4.5 \qquad (1)$$

$$d \leq Lc - 2h/\tan\theta \qquad (2)$$

<Additive manufacturing processes by powder additive manufacturing apparatus>

Next, additive manufacturing processes by the power additive manufacturing apparatus 100 having the above configuration is described.

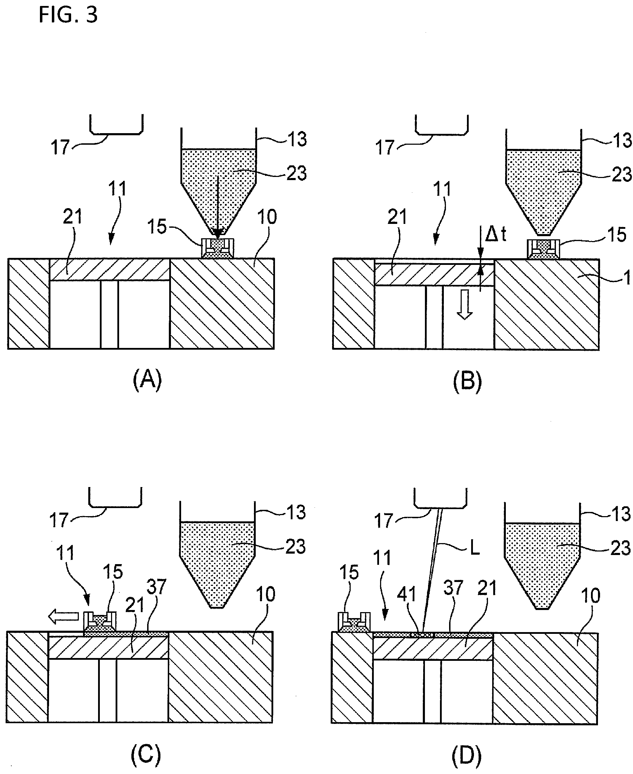

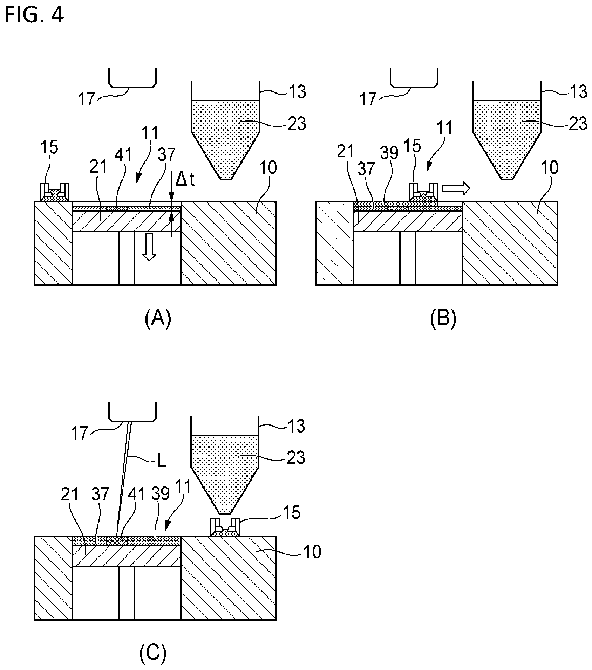

(A) to (D) of FIG. 3 and (A) to (C) of FIG. 4 show process diagrams of each additive manufacturing process in order. The operation of each process described below is performed by commands from a control unit (not shown) included in a computer device including a CPU, memory, storage, and the like.

First, as shown in (A) of FIG. 3, the recoater 15 is placed below the powder pod 13, and a predetermined amount of the powder material 23 is supplied from the powder pod 13 to the powder retention section 25 (see FIG. 2) of the recoater 15.

Next, as shown in (B) of FIG. 3, the base plate 21 is lowered by $\Delta t$ to form a step with thickness $\Delta t$ between the top surface of the housing 10 and the top surface of the base plate 21. Then, as shown in (C) of FIG. 3, the recoater 15 is moved from the position below the powder pod 13 toward the additive manufacturing section 11. Through this movement, the powder material 23 flows down from the slit outlet 27a in the recoater 15, and a layer of the powder material 23 is laid on the base plate 21. The thickness of the layer of the powder material 23 may be any thickness employed in general powder additive manufacturing method, and is not particularly limited. Here, the layer is illustrated as the thin layer 37.

Then, as shown in (D) of FIG. 3, the optical scanning section 17 emits laser beam L toward the thin layer 37 laid on the base plate 21. The thin layer 37 at predetermined positions is selectively irradiated with the laser beam L based on 3D profile data of the target shape. In the region irradiated with the laser beam L, the thin layer 37 of the powder material fuses to form a fused body 41 for one layer.

Furthermore, as shown in (A) of FIG. 4, the base plate 21 is further lowered by $\Delta t$ to form a step with thickness $\Delta t$ between the top surface of the housing 10 and the thin layer 37 on the base plate 21. Then, as shown in (B) of FIG. 4, the recoater 15 is moved from the moved position to the powder pod 13 side, and a thin layer 39 of the powder material 23 is formed on the thin layer 37 in the step. Then, as shown in (C) of FIG. 4, the optical scanning section 17 emits the laser beam L toward the formed thin layer 39 based on the 3D profile data.

By repeating the above process of laying down the powder material 23 and emitting the laser beam L, and sequentially stacking the fused bodies 41 in the additive manufacturing section 11, an additively manufactured object with a shape in accordance with the 3D profile data can be obtained.

<Flowability of powder material at slit part>

The additive manufacturing process using the powder additive manufacturing apparatus 100 with the above configuration includes a process of supplying the powder material retained in the recoater to the top surface of the housing. In this process, the shape of the slit part of the recoater is changed, and the flowability (clogging) of the powder material at the slit part is evaluated, and the results thereof are described below.

Here, the slit inclination angle $\theta$ and the slit outlet width d as shown in FIG. 2 are used as shape parameters for the slit part of the recoater. Then, a model (jig) simulating recoaters with various sizes in which the slit heights h and retention section widths Lc are different from each other was used, and the shape parameters ($\theta$ and d) were varied, and then the flowability of the powder material passing through the slit part was checked. Here, a metal powder additive manufacturing apparatus (LUMEX Avance-25, manufactured by Matsuura Machinery Corporation) was used as the additive manufacturing apparatus to which the above jig was mounted.

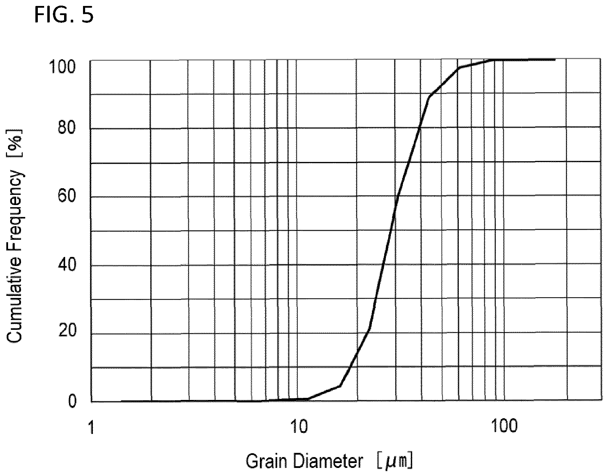

FIG. 5 shows a single logarithmic graph of cumulative frequency distribution of grain size of powder materials used, where the grain size is put on the logarithmic axis.

The powder material used here is made of SUS 316L, and the accumulated mass of grains with a diameter of more than 45 [$\mu$m] is equal to or more than 0.5 mass% of the total mass, and the number of grains with a diameter of 20 [$\mu$m] or less based on electron microscope observation is equal to or less than 15 number% of the total number of grains. In addition, powders with a grain size of 10 to 45 [$\mu$m] makes up about 90% of the total powder material. This powder material is a powder manufactured by the water atomization method. The grain size of the powder material can be measured by, for example, a laser diffraction/scattering particle size analyzer (LA-300, manufactured by HORIBA, Ltd.).

The test procedure for flowability is as follows.

(1) A jig made to simulate a recoater is placed so as to have a distance being equal to the distance Ls from the slit outlet surface 27c of the slit part 27 to the top surface of the housing 10, as shown in FIG. 2. In other words, the jig is placed at a height of 15 [mm] corresponding to the distance Ls from the flat surface of the housing 10.
(2) A powder material is supplied to the powder retention section of the jig.
(3) The jig is moved on or above the flat surface.
(4) In a case where the powder material is evenly and uniformly supplied to the area where the jig has passed over the flat surface, the case is judged to be "good; and in a case where there is an area where the powder material is not evenly and uniformly supplied, the case is judged to be "fail".

(5) For each combination of the slit inclination angle θ and the slit outlet width d, the above processes (1) to (4) are performed three times each to determine the flowability of the powder material. In a case where all three times are "good", the flowability is judged to be "∘", and in a case where even one time is "fail", the flowability is judged to be "×".

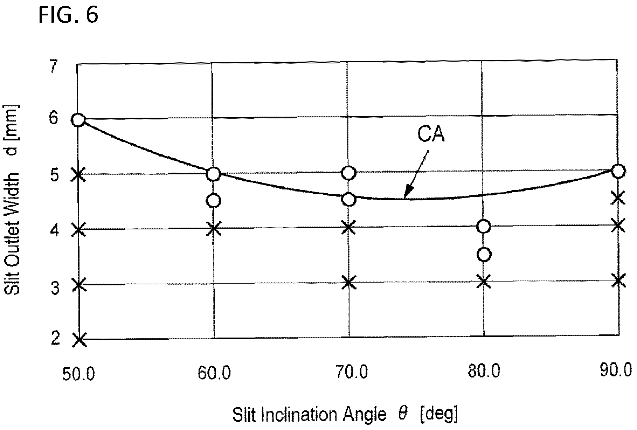

FIG. 6 is a graph showing the results of checking the flowability of the powder material by varying the slit inclination angle θ of the jig and the slit outlet width d. In this graph, the judgement results of flowability are shown as "∘" or "×" at the plot positions corresponding to the slit inclination angle θ and the slit outlet width d.

FIG. 6 shows the result of obtaining the limit curve CA of flowability from the information of the above judgment result by curve approximation and predetermined calculation. The limit curve CA indicates that the flowability of the powder material is good if the slit outlet width d is equal to or larger than the value of the limit curve CA. The approximation formula used here is the following quadratic function: $d = a \times (\theta - \theta_0)^2 + b$ (where each of a, b and $\theta_0$ is a coefficient). Each of the coefficients a and b can be determined by calculation using common approximation algorithms such as the least square method or the steepest descent method. However, if the coefficients a, b, and $\theta_0$ are determined by curve approximation alone, the approximate curve may in some cases extend into the region where the judgment result is "×". Therefore, the limit curve CA is obtained by further shifting the approximated curve such that the point where the judgment result is "×" is not positioned over the approximated curve (i.e. not equal to or more than the slit outlet width d). This shifting process may be done by increasing or decreasing the coefficient b, may be done by changing at least two of the coefficients a, b, and $\theta_0$ together, or the like.

The limit curve CA, with coefficients a, b, and $\theta_0$ determined as described above, is a line of limit values determined by the slit outlet width d and slit inclination angle θ shown in the above relation (1).

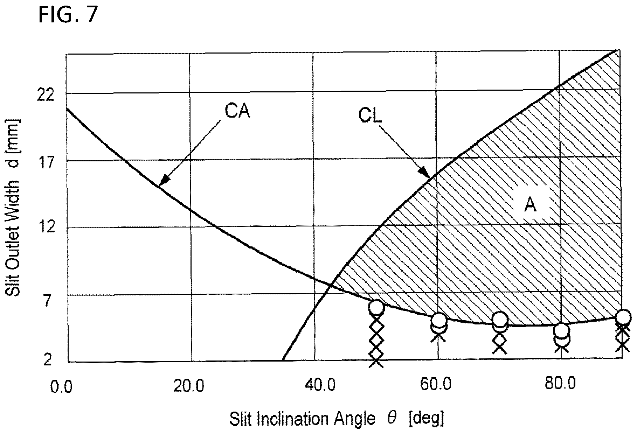

FIG. 7 is a graph showing extended data of FIG. 6 with the extended horizontal and vertical axes.

FIG. 7 shows the above limit curve CA for flowability and the limit curve CL based on the slit shape. The limit curve CL is determined based on the above slit height h, the retention section width Lc, and constraint of the geometric shape of the slit part.

The limit curve CL is a line of limit values of the slit outlet width d and the slit inclination angle θ expressed by the following relation (3).

$$d + 2h/\tan\theta \leq Lc \quad (3)$$

In other words, a total of the slit outlet width d on the lower side of the bottom plate 31 (see FIG. 2) constituting the slit part 27 and the separation distance (2h/tanθ) between the edges 33a and 35a on the upper side of the slit inner wall surfaces 33 and 35 is equal to or less than the width Lc of the powder retention section. The above relation (3) is summarized for d as the above relation (2).

Therefore, as for the shape of the recoater that provides good flowability without causing clogging of powder material at the slit part, the slit inclination angle θ and the slit outlet width d should be determined within the region A with the lower limit being the limit curve CA and the upper limit being the limit curve CL.

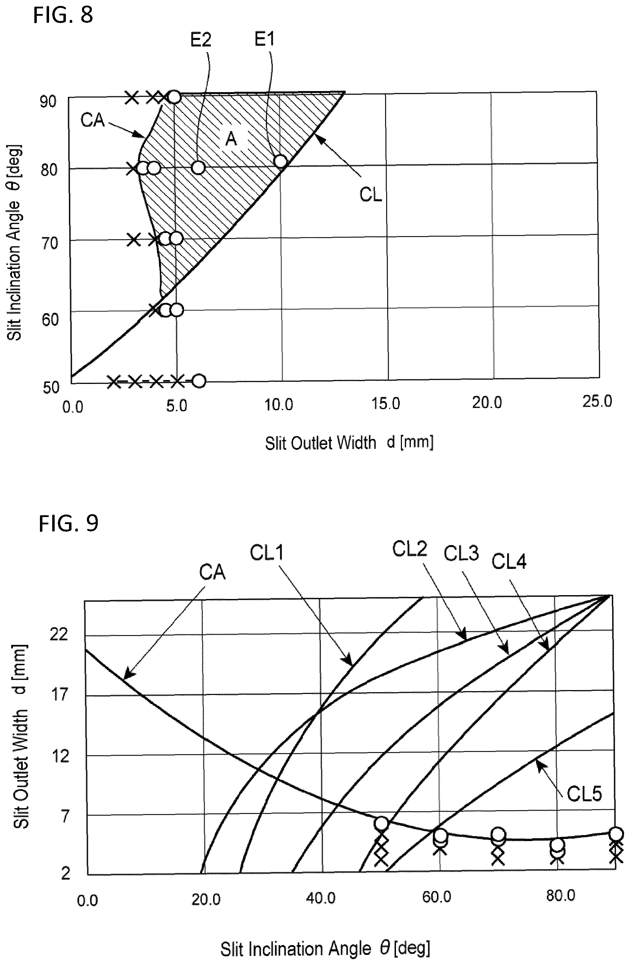

FIG. 8 shows a graph showing test results of checking the supply of the powder material by varying the slit outlet width d and the slit inclination angle θ.

The test procedure for flowability and the criteria for judging "∘" or "×" are the same as in the case of FIG. 6 described above. FIG. 8 also shows the test results in FIG. 6 and the limit curve CA, limit curve CL, and region A, which are determined by the test results, are shown together.

Here, tests were performed for Test Example 1 and Test Example 2, which are different in combination of slit outlet width d and slit inclination angle θ, which are included in the region A.

In Test Example 1, the slit outlet width d was 10.18 [mm] and the slit inclination angle θ was 80 [°]. In Test Example 2, the slit outlet width d was 6.00 [m] and the slit inclination angle θ was 80 [°]. In addition, in both Test Examples 1 and 2, the slit height h was 8 [mm] and the retention section width Lc was 25 [mm].

As a result of testing under the above conditions, in Test Example 1 (E1 shown in FIG. 8) and Test Example 2 (E2 shown in FIG. 8), the results of flowability were both "∘". Thus, by determining the region A using the limit curves CA and CL, and selecting the slit outlet width d and the slit inclination angle θ which are included in the region A, occurrence of powder supply failure can be prevented even for powders manufactured by the water atomization method. As a result, additive manufacturing can be stably performed at a low cost without requiring special improvements (such as additives, grain size adjustment, or grain shape adjustment) to the powder material itself. In addition, the water atomization method can produce powders at a lower cost than, for example, the gas atomization method, and therefore the material cost for the additively manufactured object can be reduced. As for the recoater included in the metal powder additive manufacturing apparatus (LUMEX Avance-25, manufactured by Matsuura Machinery Corporation), the slit outlet width d is about 1 to 2 mm, the slit inclination angle θ is about 60 [°], which are not included in the region A surrounded by the limit curves CA and CL.

Next, the variation of the limit curve CL based on the dimensions of various recoaters is described.

FIG. 9 shows a graph showing the limit curves CL1 to CL5 for different dimensions of the recoaters.

Here, the slit height h and the retention section width Lc were set to the following five different sizes, and the limit curves CL1 to CL5 were obtained using the above relation (3).

CL1: h = 8 [mm], Lc = 35 [mm]
CL2: h = 4 [mm], Lc = 25 [mm]
CL3: h = 8 [mm], Lc = 25 [mm]
CL4: h = 12 [mm], Lc = 25 [mm]
CL5: h = 8 [mm], Lc = 15 [mm]

For example, in the case where the slit height h of the recoater is 8 [mm] and the retention section width Lc is 25 [mm], the limit of the slit inclination angle $\theta$ is 42.5 [°]. At this point, to expand the range of angles that can be adopted for the slit inclination angle $\theta$, the values of the slit height h and the retention section width Lc should be increased. However, it is preferable to increase the values of h and Lc within the range that does not cause excessive supply of the powder material to the recoater.

As described above, by determining the dimensions of the recoater within the region A defined by the limit curves CA and CL, the powder material is not clogged at the nozzle of the recoater, even if it has relatively low flowability, such as the powder material manufactured by the water atomization method.

The present invention is not limited to the above embodiments, and mutual combination of each configuration in the embodiments, and changes or applications by those skilled in the art based on the description and common techniques, are also contemplated in the present invention and are included in the scope of protection sought.

The laser beam emitted from the optical scanning section described above is used as a heat source, but in a case where the powder material contains a light-curable composition, for example, light beam for curing based on light curable composition, such as UV laser, may be used.

In addition to the water atomization method and gas atomization method, various manufacturing methods such as plasma atomization method, milling method, and powder spray method can be employed for manufacturing the powder materials.

As described above, the present description discloses the followings.

[1] A recoater that is to be used in an additive manufacturing apparatus based on a powder bed fusion method in which a powder material laid on or above an additive manufacturing section is selectively fused to form a fused body and the fused body is sequentially stacked, and moves over the additive manufacturing section to form a layer of the powder material on or above the additive manufacturing section,
the recoater comprising:

a powder retention section that retains the powder material; and
a slit part that is provided on the powder retention section, is a member extending in a direction that intersects with a moving direction of the recoater over the additive manufacturing section, and has a slit inlet that receives the powder material from the powder retention section and a slit outlet through which the powder material is discharged,
wherein a pair of slit inner wall surfaces facing each other across a gap in the moving direction is formed to be mutually inclined in the slit part such that the gap becomes narrower toward the slit outlet, and
the following relations (1) and (2) are satisfied:

$$d \geq 0.0024 \times (\theta - 75°)^2 + 4.5 \qquad (1)$$

$$d \leq Lc - 2h/\tan\theta \qquad (2)$$

wherein $\theta$ [°] is a slit inclination angle being an acute angle formed by at least one of the slit inner wall surfaces and a slit outlet surface of the slit part, d [mm] is a slit outlet width being a width of the slit outlet formed by the pair of slit inner wall surfaces in the moving direction, h [mm] is a slit height being a shortest distance between the slit outlet and the slit inlet, and Lc [mm] is a retention section width being a width of the powder retention section in the moving direction at a position where the powder retention section is connected to the slit part. In this recoater, the slit outlet width d and the slit inclination angle $\theta$ are determined such that the slit shape can be formed depending on the slit height h and the retention section width Lc while maintaining good flowability of the powder material which is determined by the slit outlet width d and the slit inclination angle θ. As a result, additive manufacturing can be smoothly performed while preventing the powder material from being clogged at the slit part and maintaining good flowability.

[2] The recoater according to [1], wherein in the powder material, the number of grains with a diameter of 20 [μm] or less based on electron microscope observation is equal to or less than 15 number% of a total number of grains. In this recoater, flowability of the powder material suitable for additive manufacturing can be maintained.

[3] The recoater according to [1] or [2], wherein a space formed by the pair of slit inner wall surfaces is tapered. In this recoater, flowability of the powder material passing through the slit is good for both the moving direction of the reciprocating recoater.

[4] An additive manufacturing apparatus comprising the recoater according to any one of [1] to [3]. In this additive manufacturing apparatus, a recoater having a slit part that can always provide good flowability regardless of the manufacturing method of a powder material to be supplied can be obtained, and therefore additive manufacturing can be performed smoothly.

[5] An additive manufacturing method based on a powder bed fusion method, comprising selectively fusing a powder material laid on or above an additive manufacturing section to form a fused body, and sequentially stacking the fused body,

the additive manufacturing method comprising moving a recoater over the additive manufacturing section to form a layer of the powder material on or above the additive manufacturing section,
the recoater comprising:

a powder retention section that retains the powder material; and
a slit part that is provided on the powder retention section, is a member extending in a direction that intersects with a moving direction of the recoater over the additive manufacturing section, and has a slit inlet that receives the powder material from the powder retention section and a slit outlet through which the powder material is discharged,
wherein a pair of slit inner wall surfaces facing each other across a gap is formed to be mutually inclined in the slit part such that the gap in the moving direction becomes narrower toward the slit outlet, and

the following relations (1) and (2) are satisfied:

$$d \geq 0.0024 \times (\theta - 75°)^2 + 4.5 \qquad (1)$$

$$d \leq Lc - 2h/\tan\theta \qquad (2)$$

wherein θ [°] is a slit inclination angle being an acute angle formed by at least one of the slit inner wall surfaces and a slit outlet surface of the slit part, d [mm] is a slit outlet width being a width of the slit outlet formed by the pair of slit inner wall surfaces in the moving direction, h [mm] is a slit height being a shortest distance between the slit outlet and the slit inlet, and Lc [mm] is a retention section width being a width of the powder retention section in the moving direction at a position where the powder retention section is connected to the slit part.

In this additive manufacturing method, the slit outlet width d and the slit inclination angle θ are determined such that the slit shape can be formed depending on the slit height h and the retention section width Lc while maintaining good flowability of the powder material which is determined by the slit outlet width d and the slit inclination angle θ. As a result, additive manufacturing can be smoothly performed while preventing the powder material from being clogged at the slit part and maintaining good flowability.

[6] The additive manufacturing method according to [5], wherein a powder manufactured by a water atomization method is used as the powder material.

In this additive manufacturing method, even for the powder material that has an irregular surface shape and is manufactured by the water atomization method that provides relatively low flowability, the powder material can be prevented from being clogged at the slit part and good flowability can be obtained.

This application is based on Japanese patent application No 2019-152745 filed on August 23, 2019, the contents of which are incorporated herein by reference.

REFERENCE SIGNS LIST

| | |
|---|---|
| 10 | Housing |
| 11 | Additive manufacturing section |
| 13 | Powder pod |
| 15 | Recoater |
| 17 | Optical scanning section |
| 21 | Baseplate |
| 23 | Powder material |
| 25 | Powder retention section |
| 27 | Slit part |
| 27a | Slit outlet |
| 27c | Slit outlet surface |
| 29 | Blade |
| 31 | Bottom plate (plate member) |
| 33, 35 | Slit inner wall surface |
| 37, 39 | Thin layer (layer) |
| 41 | Fused body |
| 100 | Powder additive manufacturing apparatus |
| L | Laser beam |

**Claims**

1. A recoater that is to be used in an additive manufacturing apparatus based on a powder bed fusion method in which a powder material laid on or above an additive manufacturing section is selectively fused to form a fused body and the fused body is sequentially stacked, and moves over the additive manufacturing section to form a layer of the powder material on or above the additive manufacturing section,
   the recoater comprising:

   a powder retention section that retains the powder material; and
   a slit part that is provided on the powder retention section, is a member extending in a direction that intersects with a moving direction of the recoater over the additive manufacturing section, and has a slit inlet that receives the powder material from the powder retention section and a slit outlet through which the powder material is discharged,
   wherein a pair of slit inner wall surfaces facing each other across a gap in the moving direction is formed to be mutually inclined in the slit part such that the gap becomes narrower toward the slit outlet, and
   the following relations (1) and (2) are satisfied:

$$d \geq 0.0024 \times (\theta - 75°)^2 + 4.5 \qquad (1)$$

$$d \leq Lc - 2h/\tan\theta \qquad (2)$$

   wherein $\theta$ [°] is a slit inclination angle being an acute angle formed by at least one of the slit inner wall surfaces and a slit outlet surface of the slit part, d [mm] is a slit outlet width being a width of the slit outlet formed by the pair of slit inner wall surfaces in the moving direction, h [mm] is a slit height being a shortest distance between the slit outlet and the slit inlet, and Lc [mm] is a retention section width being a width of the powder retention section in the moving direction at a position where the powder retention section is connected to the slit part.

2. The recoater according to claim 1, wherein in the powder material, the number of grains with a diameter of 20 [$\mu$m] or less based on electron microscope observation is equal to or less than 15 number% of a total number of grains.

3. The recoater according to claim 1, wherein a space formed by the pair of slit inner wall surfaces is tapered.

4. The recoater according to claim 2, wherein a space formed by the pair of slit inner wall surfaces is tapered.

5. An additive manufacturing apparatus comprising the recoater according to any one of claims 1 to 4.

6. An additive manufacturing method based on a powder bed fusion method, comprising selectively fusing a powder material laid on or above an additive manufacturing section to form a fused body, and sequentially stacking the fused body,

the additive manufacturing method comprising moving a recoater over the additive manufacturing section to form a layer of the powder material on or above the additive manufacturing section,
the recoater comprising:

a powder retention section that retains the powder material; and
a slit part that is provided on the powder retention section, is a member extending in a direction that intersects with a moving direction of the recoater over the additive manufacturing section, and has a slit inlet that receives the powder material from the powder retention section and a slit outlet through which the powder material is discharged,
wherein a pair of slit inner wall surfaces facing each other across a gap is formed to be mutually inclined in the slit part such that the gap in the moving direction becomes narrower toward the slit outlet, and

the following relations (1) and (2) are satisfied:

$$d \geq 0.0024 \times (\theta - 75°)^2 + 4.5 \qquad (1)$$

$$d \leq Lc - 2h/\tan\theta \qquad (2)$$

wherein $\theta$ [°] is a slit inclination angle being an acute angle formed by at least one of the slit inner wall surfaces and a slit outlet surface of the slit part, d [mm] is a slit outlet width being a width of the slit outlet formed by the pair of slit inner wall surfaces in the moving direction, h [mm] is a slit height being a shortest distance between the slit outlet and the slit inlet, and Lc [mm] is a retention section width being a width of the powder retention section in the moving direction at a position where the powder retention section is connected to the slit part.

7. The additive manufacturing method according to claim 6, wherein a powder manufactured by a water atomization method is used as the powder material.

EP 3 991 877 A1

FIG. 1

12

FIG. 2

FIG. 3

(A)

(B)

(C)

(D)

FIG. 4

(A)

(B)

(C)

FIG. 5

FIG. 6

## FIG. 7

## FIG. 8

## FIG. 9

## INTERNATIONAL SEARCH REPORT

| | International application No. |
| --- | --- |
| | PCT/JP2020/030636 |

**A. CLASSIFICATION OF SUBJECT MATTER**
B22F 3/105(2006.01)i; B22F 3/16(2006.01)i; B22F 9/08(2006.01)i; B33Y
10/00(2015.01)i; B33Y 30/00(2015.01)i; B29C 64/153(2017.01)i; B29C
64/205(2017.01)i
FI: B22F3/16; B33Y30/00; B33Y10/00; B29C64/153; B29C64/205;
     B22F3/105; B22F9/08 A

According to International Patent Classification (IPC) or to both national classification and IPC

**B. FIELDS SEARCHED**

Minimum documentation searched (classification system followed by classification symbols)
B22F3/105; B22F3/16; B22F9/08; B33Y10/00; B33Y30/00; B29C64/153;
B29C64/205

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 2018/0079133 A1 (VOXELJET AG) 22 March 2018 (2018-03-22) fig. 6-8, paragraphs [0035]-[0040], [0085], [0119], [0122], claims | 1-7 |

☐ Further documents are listed in the continuation of Box C.  ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 September 2020 (30.09.2020) | 02 November 2020 (02.11.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2020/030636 |

| Patent Documents referred in the Report | Publication Date | Patent Family | Publication Date |
| --- | --- | --- | --- |
| US 2018/0079133 A1 | 22 Mar. 2018 | WO 2016/146095 A1 pp. 8-9, 22, 28-29, fig. 6-8, claims | |

Form PCT/ISA/210 (patent family annex) (January 2015)

**EP 3 991 877 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018172739 A

- JP 2019152745 A